Europäisches Patentamt

European Patent Office

Office européen des brevets

(19)

(11) Veröffentlichungsnummer: **0 354 373**

**A2**

(12) **EUROPÄISCHE PATENTANMELDUNG**

(21) Anmeldenummer: **89112808.4**

(22) Anmeldetag: **13.07.89**

(51) Int. Cl.⁴: **H04N 7/13**

(30) Priorität: **11.08.88 DE 3827218**

(43) Veröffentlichungstag der Anmeldung:
**14.02.90 Patentblatt 90/07**

(84) Benannte Vertragsstaaten:
**DE ES FR GB IT**

(71) Anmelder: **ROBERT BOSCH GMBH**
**Postfach 10 60 50**
**D-7000 Stuttgart 1(DE)**

(72) Erfinder: **Behrens, Andreas**
**Hermannstrasse 11**
**D-3207 Harsum(DE)**
Erfinder: **Amor, Hamed**
**Bischof-Gerhard-Strasse 30°**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Einrichtung zur Übertragung von Videosignalen.**

(57) Bei einer Einrichtung zur Schmalband-Bildüber-tragung, wobei ein durch datenreduzierende blockweise Codierung von Videosignalen entstandener Datenstrom einer Entropie-Codierung unterworfen ist, werden für jeweils ein Bild ein Synchronisierco-de, weitere das jeweilige ganze Bild betreffende Daten und für jeweils eine vom Bildinhalt abhängige Zahl von Blöcken Datenblöcke übertragen, die eine Blockadresse, eine Angabe über den Blocktyp, co-dierte Videodaten und ein Blockendezeichen enthal-ten. Bei einer Einrichtung zur Entropie-Codierung sind die blockweise codierten Daten über einen Zwi-schenspeicher einem digitalen Signalprozessor und ferner über Register Adresseneingängen eines Nur-Lese-Speichers zuführbar. Die Ausgänge des Nur-Lese-Speichers sind über weitere Register mit ei-nem Parallel/Seriell-Wandler verbunden.

**C - Coder**

BSp 6

1   C

Y

4 A/D

5

8

9 FIFO

10

12 DCT

13

23

24 Puffer

2 Kanal

BSp 7

Entropie-Coder

14 IDCT

11

20 FIFO

15

21 Bewegungs-schätzer

BSp 16

19

18

BSp 17

22 Adressenlogik

**Fig. 1**

## Einrichtung zur Übertragung von Videosignalen

Die Erfindung geht aus von einer Einrichtung nach der Gattung des Hauptanspruchs.

Zur Übertragung von bewegten Bildern, beispielsweise beim Schmalband-Bildtelefon, sind verschiedene datenreduzierende Codierverfahren bekannt geworden. Eine wesentliche Datenreduzierung wird durch gemeinsame Anwendung verschiedener Verfahren möglich, wie beispielsweise Reduzierung der Bewegungsauflösung, DPCM in der Zeitebene (Interframe-Codierung) und diskrete Cosinus-Transformation in der Ortsebene. Da die somit gewonnenen zu übertragenen Terme verschieden häufig auftreten, kann mit einer Entropie-Codierung, beispielsweise einer Huffman-Codierung, eine weitere Reduzierung der zu übertragenen Datenmenge erzielt werden.

Aufgabe der vorliegenden Erfindung ist es, eine Einrichtung zur Übertragung von Bewegtbildern anzugeben, bei welcher die von einem Empfänger benötigten Informationen mit einem möglichst geringen Bandbreitenbedarf übertragen werden können. Ferner soll die Erfindung eine Entropie-Codierung mit möglichst geringem Aufwand ermöglichen.

Die erfindungsgemäße Einrichtung mit den kennzeichnenden Merkmalen des Hauptanspruchs hat den Vorteil, daß die denjenigen Bildinhalt beschreibenden Signale zusammen mit für eine Decodierung erforderlichen zusätzlichen Signalen in einer Form übertragen werden, die wenig Bandbreite erfordert.

Durch die in den Unteransprüchen aufgeführten Maßnahmen sind vorteilhafte Weiterbildungen und Verbesserungen der im Hauptanspruch angegebenen Erfindung möglich.

Insbesondere betreffen Weiterbildungen der Erfindung Einrichtungen, bei welchen eine Entropie-Codierung in besonders günstiger Weise durchgeführt wird.

Ausführungsbeispiele der Erfindung sind in der Zeichnung anhand mehrerer Figuren dargestellt und in der nachfolgenden Beschreibung näher erläutert. Es zeigt:

Fig. 1 ein Blockschaltbild einer Sendeeinrichtung für ein Schmalband-Bildtelefon,

Fig. 2 eine schematische Darstellung des Formats, der bei der erfindungsgemäßen Einrichtung übertragenen Signale,

Fig. 3 eine Tabelle zur Erläuterung eines Teils der zu übertragenen Signale,

Fig. 4 ein Blockschaltbild einer erfindungsgemäßen Einrichtung zur Entropie-Codierung,

Fig. 5 ein Flußdiagramm eines Programms für einen bei der Einrichtung nach Fig. 4 verwendeten digitalen Signalprozessor und

Fig. 6 ein Unterprogramm zu dem Programm nach Fig. 5.

Gleiche Teile sind in den Figuren mit gleichen Bezugszeichen versehen.

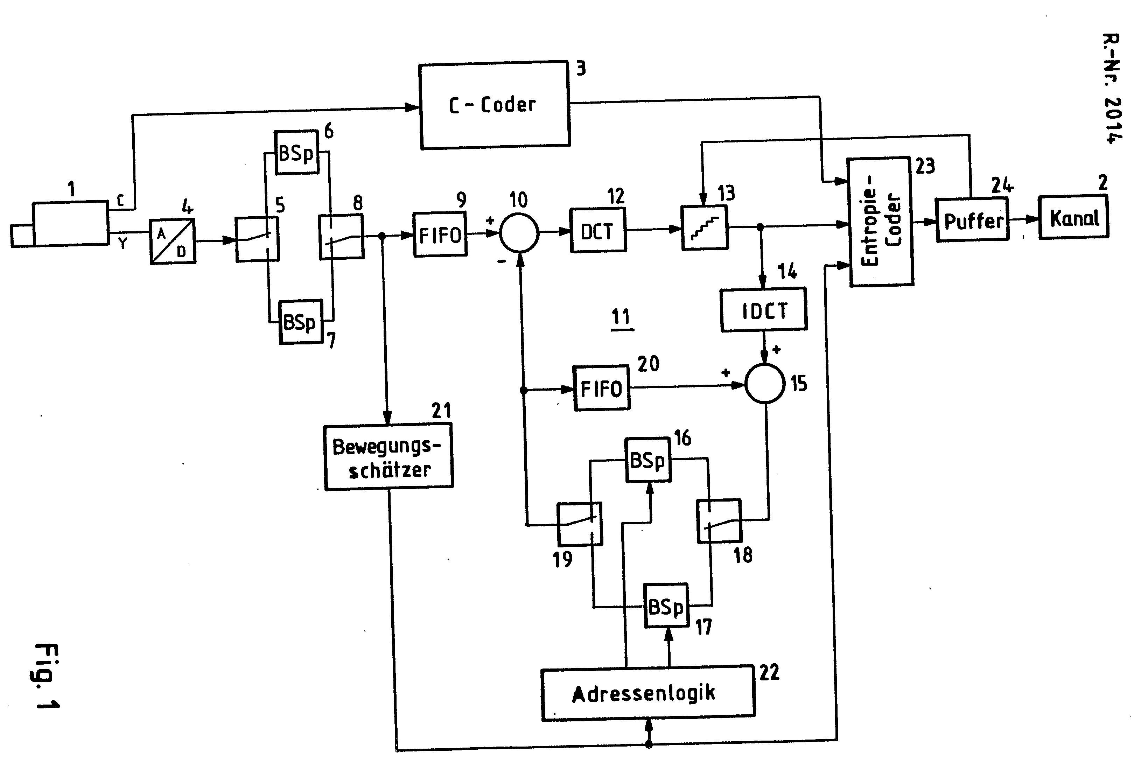

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-DPCM vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also die Differenzen zwischen dem jeweils von der Kamera erzeugten Signal und dem Signal eines gespeicherten Bildes - blockweise transformiert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und für die Chrominanz jeweils 8 x 8 Bildelemente große Blökke als günstig herausgestellt.

Da die diskrete Cosinus-Transformation an sich bekannt ist (siehe Ahmed N., Nataragan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwellen mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist. Droht der Pufferspeicher 24 überzulaufen, so wird die dem Puffer zugeführte Datenmenge reduziert, was insbesondere durch eine entsprechende Steuerung des Quantisierers 13 erfolgen kann.

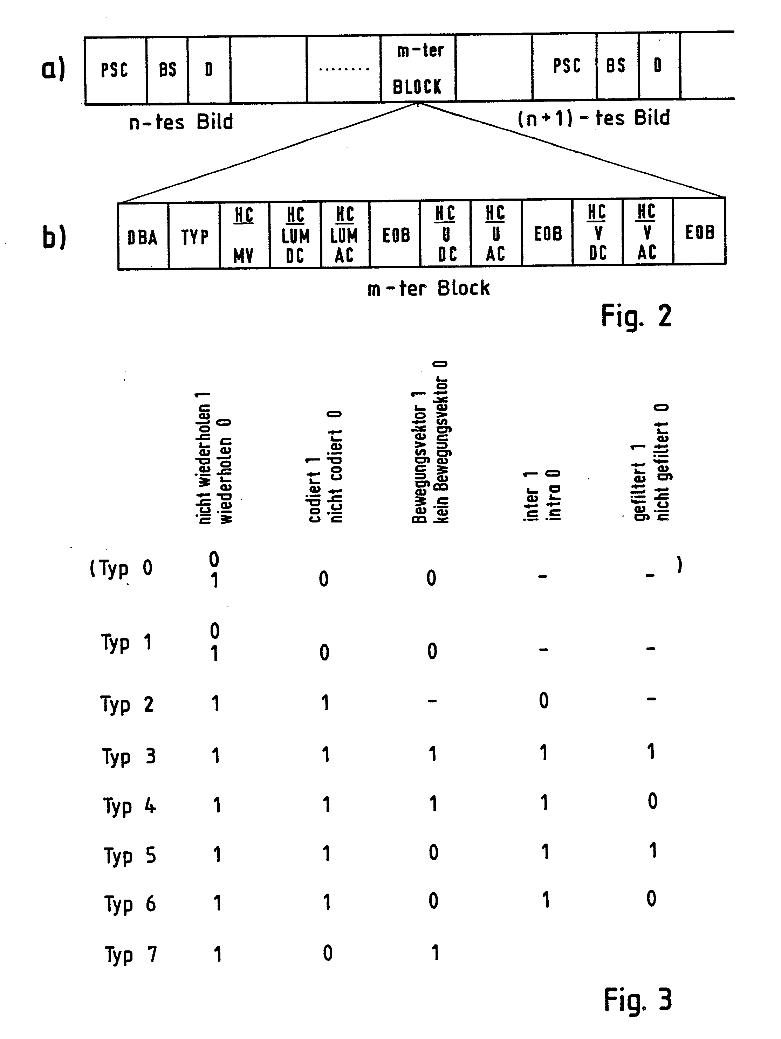

Fig. 2 stellt in Zeile a) schematisch das Format des zu übertragenden Signals während eines n-ten Bildes und während des Beginn des folgenden, (n + 1)-ten Bildes dar. Zu Beginn eines jeden Bildes wird ein Synchronisiercode PSC gesendet, der in an sich bekannter Weise eine ansonsten nicht vorkommende Bitkombination enthält, welche vom Empfänger als Beginn des Bildes erkannt wird. Es folgt ein Datenwort BS, welches den Füllungsgrad des Pufferspeichers (24) wiedergibt und ein weiteres Datenwort D, das die bei der Codierung verwendete Quantisierungskennlinie repräsentiert. Bis zum Beginn des folgenden Synchronisiercodes PSC für das (n + 1)-te Bild werden Datenblöcke gesendet, deren grundsätzliches Format in Zeile b) der Fig. 2 dargestellt ist. Zu Beginn eines jeden Datenblocks wird eine differentielle Datenblockadresse DBA gesendet.

Bei einer realisierten Sendeeinrichtung nach Fig. 1 wurde das Bild in 396 Blöcke aufgeteilt. Um für den jeweils zu übertragenden Datenblock nicht eine entsprechend dieser Aufteilung neunstellige differentielle Datenblockadresse senden zu müssen, wird gemäß einer Weiterbildung der Erfindung als differentielle Datenblockadresse die Differenz zum zuletzt gesendeten Datenblock angegeben. Bei der Übertragung von sehr wenigen Datenblöcken pro Bild wären jedoch auch hier hohe Adressen erforderlich. Es wird die Blockadresse deshalb auf einen Maximalwert von beispielsweise 32 begrenzt. Wenn der relative Abstand den Maximalwert erreicht, ohne daß ein neuer Datenblock zu senden ist, wird trotzdem ein Datenblock gesendet, der jedoch lediglich besagt, daß der Maximalwert erreicht ist, und keine neuen Daten enthält. Letztere Information wird in einem auf die Blockadresse folgenden Datenwort TYP zusammen mit anderen Informationen übertragen.

Danach folgen die Bewegungsvektoren MV, für den Luminanz-Gleichanteil LUM DC und die - Wechselanteile LUM AC jeweils als Huffman-Code. Nach dem letzten Codewort LUM AC folgt ein Datenwort EOB, das das Ende der Übertragung der jeweiligen Koeffizienten eines Blocks bedeutet.

Der Datenblock enthält ferner die Huffman-codierten Koeffizienten für das Farbdifferenzsignal U, ein weiteres Datenwort EOB und die Huffman-codierten Koeffizienten des Farbdifferenzsignals V.

Schließlich wird der Datenblock durch ein Datenwort EOB abgeschlossen.

Im folgenden wird das Datenwort TYP anhand der in Fig. 3 dargestellten Tabelle erläutert. Der Typ des jeweiligen Datenblocks hängt von folgenden Eingangsgrößen ab, die jeweils durch ein Bit dargestellt sind: Die erste Stelle besagt, ob beim Empfänger der jeweilige Block zu wiederholen oder nicht zu wiederholen ist. Die zweite Stelle wird auf 1 gesetzt, wenn für den jeweiligen Block Koeffizienten übertragen werden. Eine 0 kennzeichnet, daß - bezogen auf den jeweiligen Block - derart geringe Änderungen des Bildinhalts gegenüber dem vorherigen Bild vorliegen, daß eine Übertragung von Koeffizienten sich nicht lohnt.

Die dritte Stelle besagt, ob Bewegung vorhanden ist. Die vierte Stelle ist davon abhängig, ob eine Interframe- oder eine Intraframe-Codierung gewählt wurde. Schließlich besagt die fünfte Stelle, ob bei der Codierung das Schleifenfilter 20 (Fig. 1) eingeschaltet war oder nicht.

Der Typ 0 wird nicht gesendet, während bei einem Datenblock vom Typ 1 lediglich die relative Position als Blockadresse DBA gesendet wird. Beim Typ 2 ist die vierte Stelle auf 0 gesetzt, da der betreffende Block intraframe-codiert wurde. Damit entfällt eine Information über den Bewegungsvektor sowie über die Anwendung des Schleifenfilters. Entsprechend ist dem Empfänger mitzuteilen, daß dieser Block nicht zu wiederholen ist (erste Stelle). Die Datenblöcke vom Typ 3 bis Typ 6 sind durch Interframe-Codierung entstanden, mit und ohne Bewegung bzw. mit und ohne Schleifenfilter. Beim Datenblock vom Typ 7 wurde vom Bewegungsschätzer 21 (Fig. 1) eine Bewegung ermittelt, wobei sich jedoch der Bildinhalt so geringfügig geändert hat, daß eine Übertragung von Koeffizienten sich nicht lohnt. Dieses wird dem Empfänger mitgeteilt, so daß dort der betroffene Block entsprechend den Bewegungsvektoren, die bei dem Datenblock vom Typ 7 übertragen werden, verschoben werden kann.

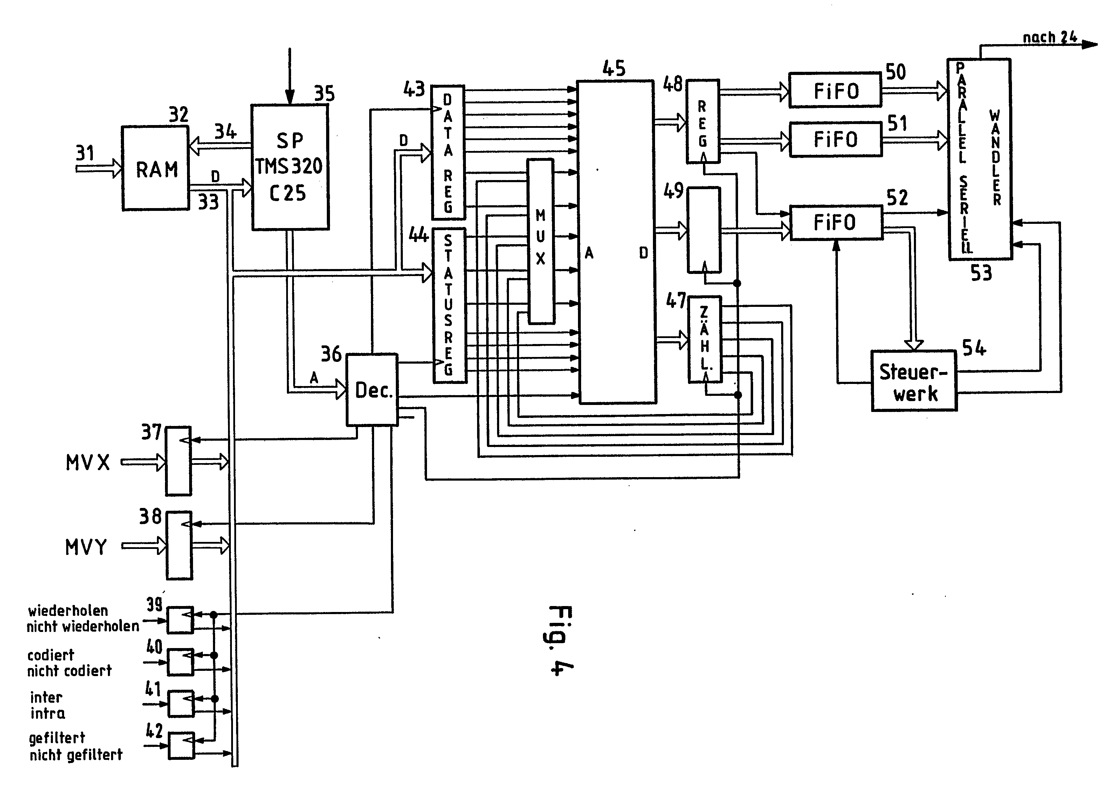

Fig. 4 zeigt ein Blockschaltbild eines Entropie-Coders 23 (Fig. 1). Einem Eingang 31 werden die Koeffizienten der DCT sowohl für die Luminanz als auch für die Chrominanz zugeführt. Sie werden in einem Zwischenspeicher 32 abgelegt, der über einen Datenbus 33 und über einen Adressenbus 34 mit einem digitalen Signalprozessor 35 verbunden ist. Als digitaler Signalprozessor 35 eignet sich beispielsweise der Baustein TMS 320 C25 der Firma Texas Instruments. Über einen weiteren Adressenausgang ist ein Adressendecoder 36 mit dem digitalen Signalprozessor 35 verbunden.

Dem Datenbus 33 können über Register 37 bis 42 die Bewegungsvektoren MVX und MVY und die bereits im Zusammenhang mit Fig. 3 beschriebenen Signale, welche zur Bildung der Typinformation herangezogen werden, zugeführt werden. Die Register 37 bis 42 werden von dem Signalprozessor 35 über den Adressendecoder 36 in geeigneter Weise angesteuert.

Schließlich ist der Datenbus 33 über zwei weitere Register 43, 44 mit Adresseneingängen eines Nur-Lese-Speichers (PROM) 45 verbindbar. Dabei wird das Register 43 als Datenregister betrieben, während das Register 44 Statusinformationen weitergibt und daher in Fig. 4 als Statusregister bezeichnet ist. Einige Ausgänge sowohl des Datenregisters 43 als auch des Statusregisters 44 sind mit den entsprechenden Adresseneingängen des Nur-Lese-Speichers 45 über einen Multiplexer 46 verbunden, so daß die betroffenen Adresseneingänge zeitweilig mit Ausgängen eines Zählers 47 verbunden werden können, der wiederum mit zwei Stellen des insgesamt 24 Bit breiten Datenausgangs des Nur-Lese-Speichers 45 verbunden ist. 17 Stellen sind mit einem Register 48 für die Huffman-Codewörter verbunden, während die restlichen fünf Stellen, welche die Längen des jeweiligen Huffman-Codewortes angeben, in ein weiteres Register 49 übernommen werden können. Über FIFO-Speicher 50, 51, 52 können aus den Registern 48, 49 die Daten einem Parallel/Seriell-Wandler 53 und einem Steuerwerk 54 zugeführt werden. Die Taktung der Register 43, 44, 48, 49 und des Zählers 47 wird ebenfalls vom digitalen Signalprozessor 35 über den Decoder 36 vorgenommen.

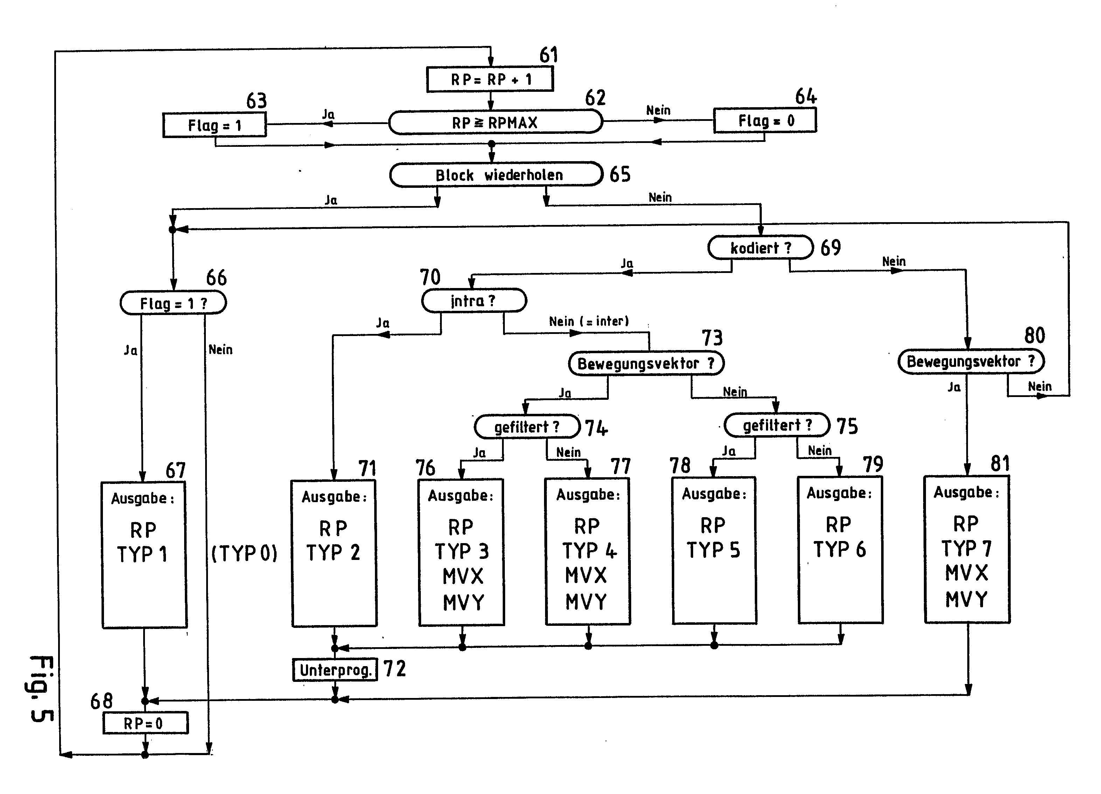

Zur Erläuterung der Funktion der Einrichtung nach Fig. 4 wird zunächst auf das in Fig. 5 dargestellte Flußdiagramm des Programms für den digitalen Signalprozessor 35 (Fig. 4) Bezug genommen. Im Programmteil 61 wird ein Zähler für die relative Position RP des jeweiligen Blocks inkrementiert. Ist die relative Position größer bzw. gleich dem Maximalwert von beispielsweise 32, so wird nach einer Verzweigung 62 bei 63 ein Flag auf 1 gesetzt. Anderenfalls wird bei 64 das Flag auf 0 gesetzt. Danach wird bei 65 das Programm in Abhängigkeit davon verzweigt, ob im Register 39 (Fig. 4) die Information "Wiederholen" oder "Nichtwiederholen" steht. Soll ein Block wiederholt werden, wird bei 66 das Flag abgefragt und das Programm entsprechend verzweigt. Ist das Flag gleich 1, der Maximalwert der relativen Position also erreicht, so erfolgt bei 67 die Ausgabe der relativen Position RP als differentielle Datenblockadresse DBA und des Datenwortes für den Typ 1. Anschließend wird bei 68 der Zähler für die relative Position wieder auf 0 gesetzt, und das Programm wird beginnend mit 61 wiederholt. Ist kein Flag gesetzt, so wird das Programm ohne Ausgabe beendet.

Im Falle der Information "Nichtwiederholen" wird nach der Verzweigung 65 in Abhängigkeit vom Inhalt des Registers 40 das Programm bei 69 nochmals verzweigt. Handelt es sich um einen codierten Block, wird bei 70 der Inhalt des Registers 41 abgefragt. Im Falle einer Infraframe-Codierung folgt bei 71 die Ausgabe der relativen Position RP und des Codewortes für Typ 2. Nach einem Unterprogramm 72, das die Ausgabe der einzelnen Koeffizienten und des Datenwortes EOB (Fig. 2) veranlaßt, wird der Zähler für die relative Position RP bei 68 wieder auf 0 gesetzt und das Programm bei 61 für den folgenden Block gestartet.

Liegt bei 70 eine Interframe-Codierung vor, wird bei 73 das Programm nochmals in Abhängigkeit vom Vorliegen eines Bewegungsvektors verzweigt. Diese Information wird dem Signalprozessor nicht gesondert zugeführt, sondern wird aus den Werten für MVX und MVY ermittelt. In beiden Fällen erfolgt danach eine Verzweigung 74 bzw. 75 in Abhängigkeit davon, ob ein Schleifenfilter angewendet wurde (Inhalt des Registers 42, Fig. 4). Bei Vorliegen von Bewegung werden in den Programmteilen 76, 77 jeweils die relative Position RP, Typ 3 bzw. Typ 4 und die Komponenten MVX und MVY des Bewegungsvektors ausgegeben. Nach dem Unterprogramm 72 wird bei 68 der Zähler für die relative Position wieder zurückgesetzt und der nächste Block bearbeitet. In den Programmteilen 78, 79 erfolgt die Ausgabe der relativen Position und des Typs 5 bzw. des Typs 6 ohne Daten für den Bewegungsvektor.

Schließlich wird bei dem dargestellten Programm auch für den Fall eines nicht codierten Blocks abgefragt, ob Bewegung vorliegt (Programmteil 80). Ist dieses der Fall wird bei 81 ein Datenblock mit der relativen Position, dem Typ 7 und dem Bewegungsvektor ausgegeben. Die Aktivierung des Unterprogramms 72 ist jedoch in diesem Fall nicht erforderlich, da keine weiteren Daten zu dem Block vom Typ 7 gehören.

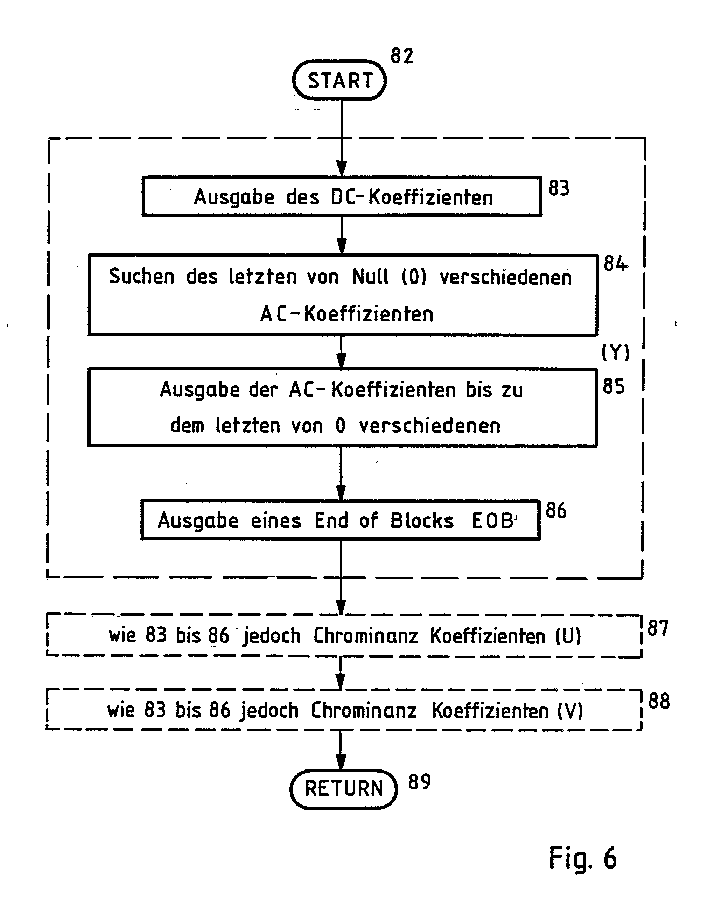

Das Unterprogramm 72 ist in Fig. 6 als weiteres Flußdiagramm dargestellt. Nach einem Start bei 82 erfolgt bei 83 die Ausgabe des Gleichspannungskoeffizienten für den jeweiligen Block. Danach wird im Programmteil 84 der letzte von 0 verschiedene Wechselspannungskoeffizient gesucht. Ist dieser gefunden, so erfolgt bei 85 die Ausgabe der Wechselspannungskoeffizienten bis zum letzten von 0 verschiedenen Wechselspannungskoeffizienten. Im Anschluß daran wird bei 86 das Datenwort EOB ausgegeben. Die Programmteile 83 bis 86 werden bei 87 für die Koeffizienten des Farbdifferenzsignals U und bei 88 für die Koeffizienten des Farbdifferenzsignals V wiederholt. Bei 89 erfolgt die Rückkehr in das Hauptprogramm.

Die in Fig. 5 mit "Ausgabe" bezeichneten Programmteile bewirken eine Ausgabe der jeweiligen Daten über die Register 43, 44 an die Adresseneingänge des Nur-Lese-Speichers 45. Dieser enthält im wesentlichen die Huffman-Wörter und deren Länge in Bit. Zusätzlich bildet der Nur-Lese-Speicher 45 zusammen mit dem Zähler 47 und dem Multiplexer 46 ein Schrittsteuerwerk, wodurch eine Lauflängen-Codierung der Wechselspannungskoeffizienten erfolgen kann. Das Schrittsteuerwerk wird durch den digitalen Signalprozessor 35 gesteuert und getaktet.

Das Huffman-Codieren der relativen Position, des Bewegungsvektors und der Gleichspannungskoeffizienten geschieht nach folgendem Ablauf: Der digitale Signalprozessor 35 beschreibt das Statusregister 44 entsprechend der Typinformation. Die zu codierenden Daten werden, falls vorhanden, vom digitalen Signalprozessor in das Datenregister 43 geschrieben. Die unter der sich somit ergebenden Adresse im Nur-Lese-Speicher 45 gespeicherten Daten stellen das entsprechende Huffman-Wort und die zugehörige Länge dar. Beides wird in die Register 48, 49 eingeschrieben.

Zum Huffman-Codieren der Wechselspannungskoeffizienten arbeitet das Schrittsteuerwerk folgendermaßen: Da die vorhergehende Bildcodierung viele Wechselspannungskoeffizienten mit dem Wert 0 liefert, wird durch eine Lauflängencodierung dieser Nullen die Datenrate weiter reduziert. Hierzu schaltet der digitale Signalprozessor 35 den Multiplexer 46 auf die Ausgänge des Zählers 47 um. Ein Teil der Eingänge des Nur-Lese-Speichers 45 ist damit mit dem Zähler 47 verbunden, der als Lauflängenzähler dient. Der digitale Signalprozessor schreibt den zu codierenden Wechselspannungskoeffizienten in das Datenregister 43. Dann verändert er das höchstwertige Bit der Huffman-Tabellen und taktet die Register 48, 49 zweimal. In dieser Zeit kann das Steuerwerk entweder den Lauflängenzähler 47 inkrementieren oder das gültige Huffman-Wort ausgeben und den Lauflängenzähler 47 rücksetzen. Erreicht der Lauflängenzähler 47 den maximalen Zählerstand von 31, so wird dieser Wert als Lauflänge übertragen. Ist die tatsächliche Länge bis zum nächsten Wechselspannungskoeffizienten größer, wird danach die verbleibende Lauflänge übertragen.

Mit Hilfe der weiteren Schaltungen der Einrichtung nach Fig. 4 erfolgt die Serialisierung der bis dahin parallel vorliegenden Huffman-Wörter. Mit jedem gültigen Huffman-Wort wird die Länge des Huffman-Wortes in Bit über das Register 49 ausgegeben. Da der digitale Signalprozessor die Register 48, 49 im Extremfall alle 200 ns taktet, können die Huffman-Wörter aus Geschwindigkeitsgründen nicht direkt serialisiert werden. Deshalb werden sie in drei FIFO-Speichern 50 bis 52 zwischengespeichert. Huffman-Wörter mit einer Länge von 0 Bit gelangen dabei nicht in die FIFO-Speicher. Solange in den FIFO-Speichern Huffman-Wörter stehen, läd das Steuerwerk 54 die Huffman-Wörter in einen Parallel/Seriell-Wandler. Die im FIFO-Speicher 52

5

außerdem abgespeicherte Länge des Huffman-Wortes gibt dem Steuerwerk 54 an, wieviele Bit der Parallel/Seriell-Wandler in den Pufferspeicher 24 (Fig. 1) schreiben muß.

Die in den Programmteilen 84 und 85 durchgeführte Ermittlung des letzten von 0 verschiedenen Wechselspannungskoeffizienten und die Ausgabe der Wechselspannungskoeffizienten setzt eine Sortierung entsprechend dem Einfluß der Koeffizienten auf die Bildwiedergabe voraus. Eine derartige Sortierung ist beispielsweise die an sich bekannte Zick-Zack-Sortierung, bei welcher nach der Gleichspannungskomponente der Koeffizient der Grundwelle in waagerechter Richtung, danach der Koeffizient der Grundwelle in senkrechter Richtung und danach im Zick-Zack sämtliche Wechselspannungskoeffizienten jeweils eines Blocks sortiert werden. Da bei den üblicherweise zu übertragenden Bildinhalten viele der Wechselspannungskoeffizienten nach der Quantisierung 0 sind, kann zur weiteren Datenreduzierung eine Lauflängen-Codierung angewandt werden. Ferner weisen viele Koeffizienten den Wert 1 auf, so daß bei der Codierung neben der Anzahl der Koeffizienten 0 ein weiterer Code für die Anzahl der Koeffizienten mit dem Wert 0, auf die ein Koeffizient mit dem Wert 1 folgt, vorgesehen ist.

Zur Lauflängen-Codierung bei gleichzeitiger Anwendung des Huffman-Codes sind dementsprechend eine Tabelle für Folgen mit Nullen, eine Tabelle für Folgen mit Nullen, an welche sich eine 1 anschließt, und eine Tabelle für Koeffizienten größer als 1 vorgesehen. Schließlich wird eine vierte Tabelle für das Blockendezeichen EOB benutzt. Diese vier Tabellen dienen zur Codierung der Wechselspannungskoeffizienten, während für den Gleichspannungskoeffizienten eine weitere Tabelle vorgesehen ist. Schließlich sind die beschriebenen fünf Tabellen jeweils für die Intraframe-Codierung des Luminanzsignals, die Interframe-Codierung des Luminanzsignals, die Intraframe-Codierung des Chrominanzsignals und die Interframe-Codierung des Chrominanzsignals im Nur-Lese-Speicher 45 abgelegt.

## Ansprüche

1. Einrichtung zur Schmalband-Bildübertragung, wobei ein durch datenreduzierende blockweise Codierung von Videosignalen entstandener Datenstrom einer Entropie-Codierung unterworfen ist, dadurch gekennzeichnet, daß für jeweils ein Bild ein Synchronisiercode (PSC), weitere das jeweilige ganze Bild betreffende Daten (BS, D) und für jeweils eine vom Bildinhalt abhängige Zahl von Blöcken Datenblöcke übertragen werden, die eine Blockadresse (DBA), eine Angabe über den Blocktyp (TYP), codierte Videodaten (HC...) und ein Blockendezeichen (EOB) enthalten.

2. Einrichtung nach Anspruch 1, dadurch gekennzeichnet, daß die jeweils das ganze Bild betreffenden Daten Informationen (D) über die jeweils bei der datenreduzierenden Codierung angewandte Quantisierung enthalten.

3. Einrichtung nach einem der Ansprüche 1 oder 2, dadurch gekennzeichnet, daß die jeweils das ganze Bild betreffenden Daten Informationen (BS) über den Füllungsgrad eines Pufferspeichers enthalten.

4. Einrichtung nach einem der vorhergehenden Ansprüche, dadurch gekennzeichnet, daß die Blockadresse (DBA) den Abstand des jeweils übertragenen Blocks vom Bildanfang bzw. vom zuletzt übertragenen Block darstellt (relative Blockadresse).

5. Einrichtung nach Anspruch 4, dadurch gekennzeichnet, daß die relative Blockadresse (DBA) nicht größer als ein vorgegebener Maximalwert sein kann und daß beim Abstand zweier zu übertragener Blöcke, welcher größer als der Maximalwert ist, ein besonders gekennzeichneter Datenblock (TYP 1) übertragen wird, der keine Bilddaten enthält und von dem aus die nächste relative Adresse berechnet wird.

6. Einrichtung nach einem der vorhergehenden Ansprüche, dadurch gekennzeichnet, daß die Datenblöcke ferner Informationen enthalten, ob der Block codiert wurde, ob eine Bewegung innerhalb des jeweiligen Blocks festgestellt wurde, ob eine Inter- oder eine Intraframe-Codierung angewendet wurde und ob die Codierung mit einem Schleifenfilter oder ohne Schleifenfilter erfolgte.

7. Einrichtung zur Entropie-Codierung eines durch datenreduzierende Codierung von Videosignalen gewonnenen Datenstroms, dadurch gekennzeichnet, daß die blockweise codierten Daten über einen Zwischenspeicher (32) einem digitalen Signalprozessor (35) und ferner über Register (43, 44) Adresseneingängen eines Nur-Lese-Speichers (45) zuführbar sind und daß die Ausgänge des Nur-Lese-Speichers (45) über weitere Register (48, 49) mit einem Parallel/Seriell-Wandler (53) verbunden sind.

8. Einrichtung nach Anspruch 7, dadurch gekennzeichnet, daß ferner den Blöcken zugeordnete Bewegungsvektoren und Informationen über die Art der Codierung des jeweiligen Blocks dem digitalen Signalprozessor (35) und dem Nur-Lese-Speicher (45) zuführbar sind.

9. Einrichtung nach einem der Ansprüche 7 oder 8, dadurch gekennzeichnet, daß der Nur-Lese-Speicher zusammen mit einer Zählschaltung (47) und einer mit einigen Adresseneingängen des Nur-Lese-Speichers (45) verbundenen steuerbaren Umschalteinrichtung (46) ein Steuerwerk bildet.

10. Einrichtung nach einem der Ansprüche 7 bis 9, dadurch gekennzeichnet, daß Ausgänge der weiteren Register (48, 49) über FIFO-Speicher (50, 51, 52) mit Eingängen des Parallel/Seriell-Wandlers (53) verbunden sind.

11. Einrichtung nach Anspruch 7, wobei durch die blockweise Codierung jeweils für einen Block und jeweils einen Farbauszug (Y, U, V) ein Gleichspannungskoeffizient und mehrere Wechselspannungskoeffizienten ermittelt werden, dadurch gekennzeichnet, daß die Koeffizienten nach dem Zick-Zack-Verfahren sortiert werden, daß danach der letzte von 0 verschiedene Wechselspannungskoeffzient festgestellt wird und daß anschließend die Wechselspannungskoeffizienten bis zum letzten von 0 verschiedenen Wechselspannungskoeffizienten übertragen werden.

12. Einrichtung nach Anspruch 11, dadurch gekennzeichnet, daß bei den Wechselspannungskoeffizienten eine Lauflängen-Codierung angewendet wird und daß eine Lauflänge, welche einen vorgegebenen Wert, vorzugsweise 31, überschreitet, durch gegebenenfalls wiederholte Übertragung des vorgegebenen Wertes und anschließende Übertragung der restlichen Lauflänge übertragen wird.

13. Einrichtung nach Anspruch 11, dadurch gekennzeichnet, daß bei der Codierung zunächst Läufe mit Nullen, danach Läufe mit Nullen, die mit dem Wert 1 enden und schließlich Werte größer gleich 1 (letzteres ohne vorangegangene 0) festgestellt werden und daß in dem Nur-Lese-Speicher (45) verschiedene Untertabellen für diese Ergebnisse und für ein Blockendezeichen (EOB), die eine Tabelle bilden, und eine weitere Tabelle für den Gleichspannungskoeffizienten und ein Blockendezeichen vorgesehen sind.

14. Einrichtung nach Anspruch 13, dadurch gekennzeichnet, daß in dem Nur-Lese-Speicher (45) jeweils für das Luminanzsignal und die Farbdifferenzsignale und jeweils für eine Intraframe-Codierung und jeweils für eine Interframe-Codierung Tabellen gemäß Anspruch 13 vorgesehen sind.

Fig. 1

C - Coder  3

BSp 6
BSp 7

5
8
9 FIFO
10
12 DCT
13
23 Entropie- Coder
24 Puffer
2 Kanal

1
4 A/D
C
Y

14 IDCT
11
20 FIFO
15
+
-
+

21 Bewegungs- schätzer

16 BSp
19
18
17 BSp

22 Adressenlogik

R.-Nr. 2014

EP 0 354 373 A2

R.-Nr. 2014

a)

| PSC | BS | D | | ........ | m-ter BLOCK | | PSC | BS | D | |

n-tes Bild  (n+1)-tes Bild

b)

| DBA | TYP | HC MV | HC LUM DC | HC LUM AC | EOB | HC U DC | HC U AC | EOB | HC V DC | HC V AC | EOB |

m-ter Block

Fig. 2

| | nicht wiederholen 1 / wiederholen 0 | codiert 1 / nicht codiert 0 | Bewegungsvektor 1 / kein Bewegungsvektor 0 | inter 1 / intra 0 | gefiltert 1 / nicht gefiltert 0 |
|---|---|---|---|---|---|
| (Typ 0 | 0 / 1 | 0 | 0 | – | – ) |
| Typ 1 | 0 / 1 | 0 | 0 | – | – |
| Typ 2 | 1 | 1 | – | 0 | – |
| Typ 3 | 1 | 1 | 1 | 1 | 1 |
| Typ 4 | 1 | 1 | 1 | 1 | 0 |
| Typ 5 | 1 | 1 | 0 | 1 | 1 |
| Typ 6 | 1 | 1 | 0 | 1 | 0 |
| Typ 7 | 1 | 0 | 1 | | |

Fig. 3

Fig. 4

EP 0 354 373 A2

EP 0 354 373 A2

61 RP = RP + 1

63 Flag = 1 ← Ja — 62 RP ≥ RPMAX — Nein → 64 Flag = 0

65 Block wiederholen

Ja    Nein

69 kodiert ?    Ja    Nein

66 Flag = 1 ?    Ja    Nein

70 intra ?    Ja    Nein ( = inter)

73 Bewegungsvektor ?    Ja    Nein

80 Bewegungsvektor ?    Ja    Nein

74 gefiltert ?    Ja    Nein

75 gefiltert ?    Ja    Nein

67 Ausgabe: RP TYP 1

(TYP 0)

71 Ausgabe: RP TYP 2

76 Ausgabe: RP TYP 3 MVX MVY

77 Ausgabe: RP TYP 4 MVX MVY

78 Ausgabe: RP TYP 5

79 Ausgabe: RP TYP 6

81 Ausgabe: RP TYP 7 MVX MVY

72 Unterprog.

68 RP = 0

Fig. 5

R.-Nr. 2014

```
                    ┌─────────────┐  82
                    │    START    │
                    └─────────────┘
                           │
                           ▼
  ┌─────────────────────────────────────────────────────┐
  │  ┌──────────────────────────────────────────┐  83    │
  │  │   Ausgabe des DC-Koeffizienten           │       │
  │  └──────────────────────────────────────────┘       │
  │                       │                              │
  │                       ▼                              │
  │  ┌──────────────────────────────────────────┐  84    │
  │  │  Suchen des letzten von Null (0) verschiedenen   │
  │  │              AC-Koeffizienten             │       │
  │  └──────────────────────────────────────────┘       │
  │                       │              (Y)             │
  │                       ▼                              │
  │  ┌──────────────────────────────────────────┐  85    │
  │  │  Ausgabe der AC-Koeffizienten bis zu      │       │
  │  │   dem letzten von 0 verschiedenen         │       │
  │  └──────────────────────────────────────────┘       │
  │                       │                              │
  │                       ▼                              │
  │  ┌──────────────────────────────────────────┐  86    │
  │  │  Ausgabe eines End of Blocks  EOB         │       │
  │  └──────────────────────────────────────────┘       │
  └─────────────────────────────────────────────────────┘
                           │
                           ▼
  ┌─────────────────────────────────────────────────────┐  87
  │  wie 83 bis 86 jedoch Chrominanz Koeffizienten (U)   │
  └─────────────────────────────────────────────────────┘
                           │
                           ▼
  ┌─────────────────────────────────────────────────────┐  88
  │  wie 83 bis 86 jedoch Chrominanz  Koeffizienten (V)  │
  └─────────────────────────────────────────────────────┘
                           │
                           ▼
                    ┌─────────────┐  89
                    │   RETURN    │
                    └─────────────┘
```

Fig. 6